# EUROPEAN PATENT APPLICATION

(11) **EP 4 779 170 A1**
(43) Date of publication of application: **22.07.2026**
(21) Application number: 24865325.5
(22) Date of filing: 04.09.2024
(51) Int. Cl.: F16F 1/12

(54) **SPRING MEMBER**

(30) Priority: 13.09.2023 JP 2023148509
(71) Applicant: NHK Spring Co., Ltd., Yokohama-shi, Kanagawa 236-0004 (JP)
(72) Inventor: KOBAYAKAWA, Jun, Yokohama-shi, Kanagawa 236-0004 (JP); SUWA, Taisuke, Yokohama-shi, Kanagawa 236-0004 (JP); SHIBATA, Yuichi, Yokohama-shi, Kanagawa 236-0004 (JP); SUGITANI, Tomoya, Yokohama-shi, Kanagawa 236-0004 (JP)
(74) Representative: Hoffmann Eitle
(86) International application number: PCT/JP2024/031663
(87) International publication number: WO 2025/057823

(57) **Abstract**

A spring member according to the present invention includes a coil spring formed of a wire rod wound in a helical way; and a sheet portion provided at one end of the coil spring and configured to receive a load of the coil spring; in which the sheet portion includes a sheet configured to cover a part of one end of the coil spring, an insulator provided between the sheet and the coil spring, and an adhesive configured to adhere the insulator and the coil spring, and, in the sheet portion, a position of an end of the adhesive on a side of the one end of the coil spring is located at an edge end of the coil spring or closer to a side of an other end of the coil spring than the edge end of the coil spring.

## Description

### Field

The present invention relates to a spring member.

### Background

A spring member is known which includes a coil spring formed by winding a wire rod in a helical way and a sheet portion provided at an end of the coil spring to receive a load of the coil spring (see, for example, Patent Literature 1). In the spring member, an insulator having elasticity is disposed between the coil spring and the sheet portion, and the coil spring and the insulator are fixed with an adhesive.

### Citation List

### Patent Literature

Patent Literature 1: JP 2019-157886 A

### Summary

### Technical Problem

Meanwhile, the spring member is required to have durability to withstand high loads.

The present invention has been made in view of the above, and an object thereof is to provide a spring member capable of improving durability to withstand loads. Solution to Problem

To solve the above-described problem and achieve the object, a spring member according to the present invention includes: a coil spring formed of a wire rod wound in a helical way; and a sheet portion provided at one end of the coil spring and configured to receive a load of the coil spring, wherein the sheet portion includes a sheet configured to cover a part of the one end of the coil spring, an insulator provided between the sheet and the coil spring, and an adhesive configured to adhere the insulator and the coil spring, and in the sheet portion, a position of an end of the adhesive on a side of the one end of the coil spring is located at an edge end of the coil spring or closer to a side of an other end of the coil spring than the edge end of the coil spring.

Moreover, in the above-described spring member according to the present invention, in the sheet portion, a position of an end of each of the insulator and the adhesive on the side of the one end of the coil spring is located at the edge end of the coil spring or closer to the side of the other end of the coil spring than the edge end of the coil spring.

Moreover, in the above-described spring member according to the present invention, the position of the end of each of the insulator and the adhesive on the side of the one end of the coil spring is located at a position in a range from the edge end to 0.1000 turns with respect to an end surface of the coil spring.

Moreover, in the above-described spring member according to the present invention, the position of the end of the adhesive on the side of the one end of the coil spring is located at a position in a range from the edge end to 0.0125 turns with respect to an end surface of the coil spring.

### Advantageous Effects of Invention

According to the present invention, it is possible to achieve a spring member capable of improving durability to withstand loads.

### Brief Description of Drawings

[FIG. 1] FIG. 1 is a view illustrating a configuration of a spring member according to an embodiment of the present invention.
[FIG. 2] FIG. 2 is an enlarged view of a part of the spring member illustrated in FIG. 1.
[FIG. 3] FIG. 3 is a view illustrating a configuration of a conventional spring member as a reference.
[FIG. 4] FIG. 4 is a view illustrating a cutting method for an insulator in an analysis.
[FIG. 5] FIG. 5 is a view (part 1) illustrating an example in which a part of an insulator is cut in a spring member.
[FIG. 6] FIG. 6 is a view (part 2) illustrating an example in which a part of the insulator is cut in the spring member.
[FIG. 7] FIG. 7 is a view illustrating an analysis result in the spring member according to the embodiment of the present invention.
[FIG. 8] FIG. 8 is an enlarged view of a part of a spring member according to a first modification to the embodiment of the present invention.
[FIG. 9] FIG. 9 is a view illustrating an analysis result in the spring member according to the first modification.
[FIG. 10] FIG. 10 is a cross-sectional view illustrating a configuration of a part of a spring member according to a second modification to the embodiment of the present invention.

### Description of Embodiments

In the following description, a spring member will be described as a mode for carrying out the present invention (hereinafter, referred to as an "embodiment"). The present invention is not limited to the embodiment. Further, in the drawings, the same portions are denoted by the same reference numerals. Furthermore, the drawings are schematic, and it should be noted that the relationship between the thickness and the width of each member, the ratio of each member, and the like are different from those in practice. In addition, there are portions in which the dimensions and ratios differ between the drawings.

### (Embodiment)

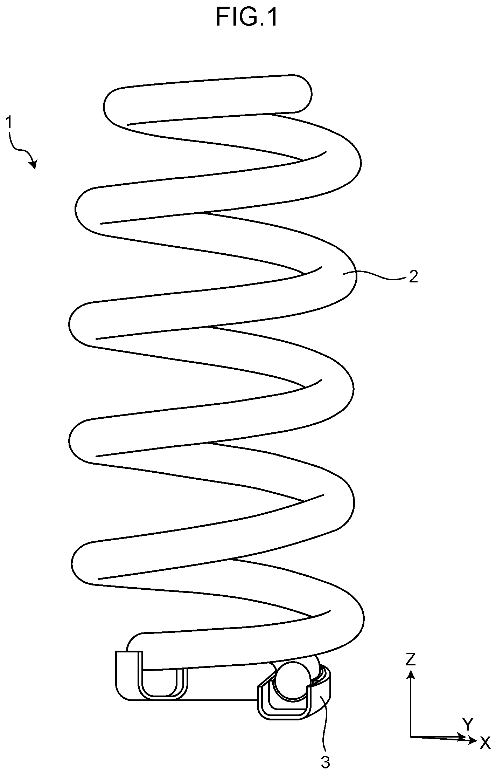

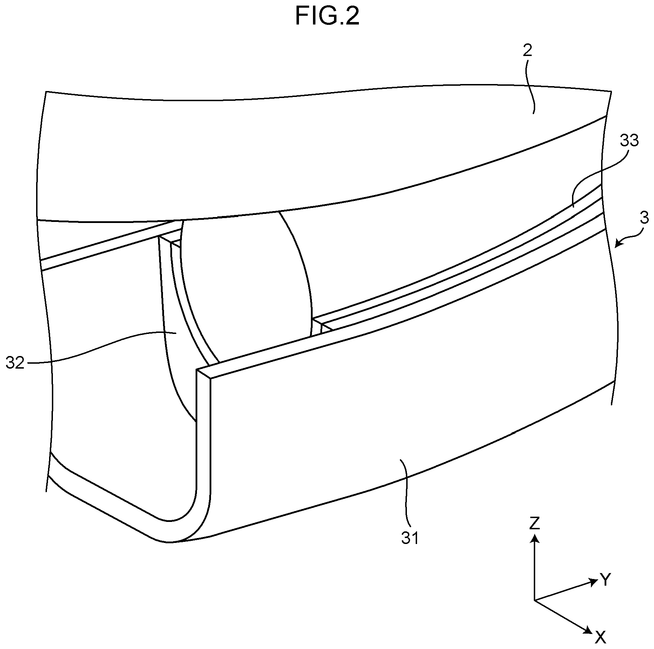

FIG. 1 is a view illustrating a configuration of a spring member according to an embodiment of the present invention. FIG. 2 is an enlarged view of a part of the spring member illustrated in FIG. 1. A spring member 1 includes a coil spring 2 formed by winding a wire rod in a helical way and a sheet portion 3 provided at an end of the coil spring 2 to receive a load of the coil spring.

The coil spring 2 is formed using, for example, flat plate-shaped spring steel made of metal, resin, or the like. In the present embodiment, it is assumed that a wire rod is wound around an axis extending in the Z direction illustrated in FIG. 1. Hereinafter, for the sake of explanation, it is assumed that a side of the coil spring 2 on which the sheet portion 3 is disposed is regarded as a proximal end side (one end side), a side of the coil spring 2 opposite to the side on which the sheet portion 3 is disposed is regarded as a distal end side (the other end side), and a load to press the coil spring 2 toward the proximal end side (one end side) is applied to an end on the distal end side (the other end side).

The sheet portion 3 includes a sheet 31 that covers a part of a proximal end of the coil spring 2, an insulator 32 provided between the sheet 31 and the coil spring 2, and an adhesive 33 that adheres the insulator 32 and the coil spring 2 to each other.

The sheet 31 has a concave shape covering a part of the proximal end of the coil spring 2. The sheet 31 has a length less than one turn of the coil spring 2 and covers the proximal end of the coil spring 2. Specifically, the sheet 31 is shaped to cover a part of a side surface of the proximal end of the coil spring 2 and to expose an end surface (surface intersecting the longitudinal (extending) direction of the wire rod) of the coil spring 2. This allows the coil spring 2 to be displaced in the extending direction (Y direction illustrated in FIG. 2) due to elastic deformation of the adhesive 33 or the like. Here, one turn corresponds to one revolution in which the wire rod of the coil spring 2 is wound around the winding axis. Hereinafter, with an end (end on the proximal end side) of the coil spring 2 on the sheet portion 3 side as a base point (0 turns), the winding position along the winding axis is expressed as a "turn". At this time, the first turn is located at a position corresponding to the above-described one revolution from the base point.

The insulator 32 is formed using an elastic material, for example, rubber. The insulator 32 is disposed between the sheet 31 and the coil spring 2 in a region where the sheet 31 is disposed.

For example, a resin is used as the adhesive 33.

In the sheet portion 3 according to the present embodiment, the positions of the ends of the insulator 32 and the adhesive 33 on the proximal end side of the coil spring 2 are located closer to the wire rod side surface than an edge end of the coil spring 2 including the edge end. The edge end herein corresponds to an outer edge forming the end surface of the coil spring 2.

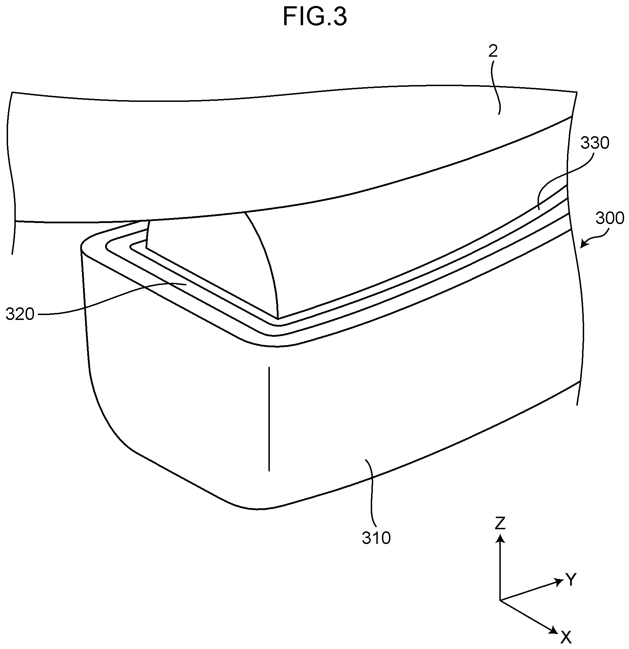

Next, a configuration of the insulator 32 and the adhesive 33 will be described with reference to FIGS. 3 to 8. Here, a description is given on a result of an analysis of a stress with respect to a range in which the insulator 32 or the adhesive 33 is disposed. In the analysis, an analytical model was created for the coil spring 2, the sheet 31, the insulator 32, and the adhesive 33, the arrangement, the material, the mesh (element division), the interaction (parameter), and the boundary condition were set, and a stress at the interface between the insulator 32 and the adhesive 33 was calculated. The stress was output as a shear stress, and a difference (ratio) with respect to the reference was calculated from the shear stress.

FIG. 3 is a view illustrating a configuration of a conventional spring member as a reference. A comparative reference spring member illustrated in FIG. 3 includes the coil spring 2 (see FIG. 1) and a sheet portion 300 provided at an end of the coil spring 2 to receive a load of the coil spring.

The sheet portion 300 includes a sheet 310 that covers a part of the proximal end of the coil spring 2, an insulator 320 provided between the sheet 310 and the coil spring 2, and an adhesive 330 that adheres the insulator 320 and the coil spring 2 to each other.

The sheet 310 has a concave shape covering a part of the coil spring 2. The sheet 31 has a length less than one turn of the coil spring 2 and covers the proximal end of the coil spring 2. Specifically, the sheet 310 covers a part of a side surface of the coil spring 2 and a part of the end surface of the coil spring 2. The sheet 310 is formed using a resin or a metal material.

The insulator 320 is formed using an elastic material, for example, rubber. The insulator 320 is disposed between the sheet 310 and the coil spring 2 in a region where the sheet 310 is disposed.

Examples of the adhesive 330 include a resin.

Similarly to the sheet 310, the insulator 320 and the adhesive 330 cover a part of the side surface of the coil spring 2 and a part of the end surface of the coil spring 2.

Therefore, the movement of the coil spring 2 in the extending direction (Y direction in FIG. 3) is restricted by the sheet portion 300.

In the analysis, a model of the comparative reference spring member was created, and the shear stress was calculated.

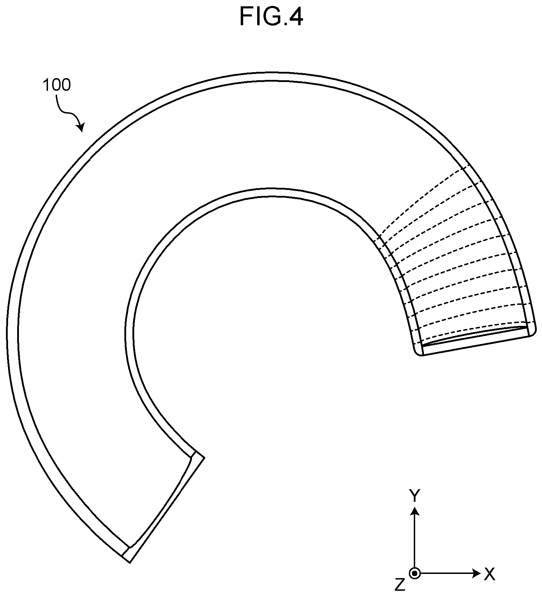

Further, in the analysis, the maximum shear stress was calculated for the configuration in which an end of the insulator 32 on the end side of the coil spring 2 was cut. FIG. 4 is a view illustrating a cutting method for an insulator in an analysis. For example, as in the insulator 32 illustrated in FIG. 4, the shear stress was analyzed for each insulator 32 obtained by cutting a part thereof along each broken line. At this time, the adhesive 33 is also cut in the same manner. The cutting is performed to move the positions of the ends of the insulator 32 and the adhesive 33 on the end side of the coil spring 2 from the proximal end of the coil spring 2 to the distal end side of the coil spring 2 (side along the wire rod).

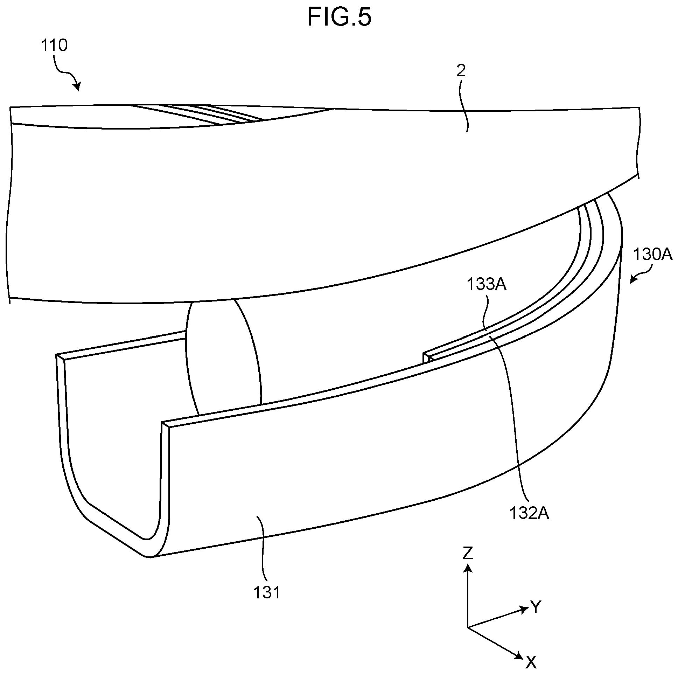

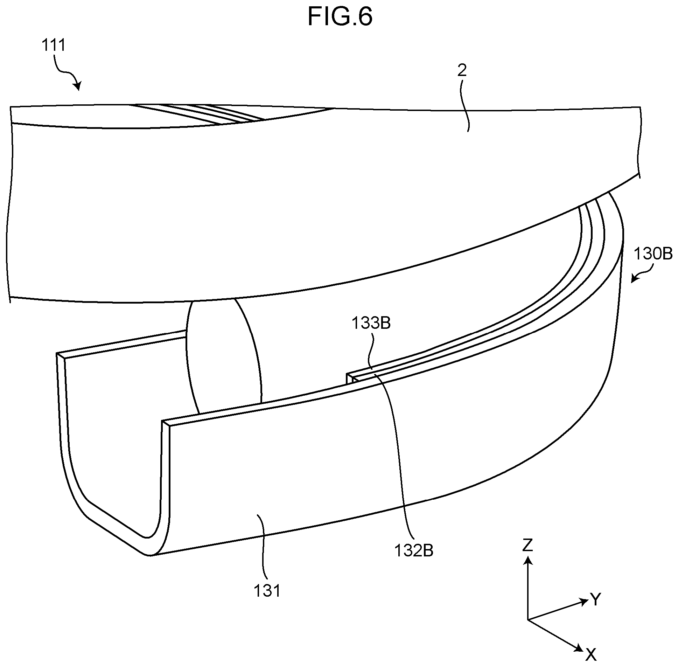

In this analysis, a model obtained by cutting a part of the insulator 32 and the adhesive 33 is created, in addition to the model having the insulator and the adhesive flush with the end surface of the coil spring 2 and the model of the comparative reference spring member as illustrated in FIGS. 1 and 2. FIGS. 5 and 6 are views each illustrating an example in which a part of the insulator is cut in the spring member. The insulator 32 and the adhesive 33 are cut to thereby create an analytical model as illustrated in FIGS. 5 and 6.

A model 110 illustrated in FIG. 5 includes a coil spring 120 corresponding to the coil spring 2 and a sheet portion 130A corresponding to the sheet portion 3.

The sheet portion 130A includes a sheet 131 corresponding to the sheet 31, an insulator 132A corresponding to the insulator 32, and an adhesive 133A corresponding to the adhesive 33. The model 110 is a model corresponding to a configuration in which the insulator 32 and the adhesive 33 illustrated in FIGS. 1 and 2 are cut by 0.0750 (= 0.0125 × 6) turns from the end on the proximal end surface side of the coil spring 2.

A model 111 illustrated in FIG. 6 includes the coil spring 120 corresponding to the coil spring 2 and a sheet portion 130B corresponding to the sheet portion 3.

The sheet portion 130B includes the sheet 131 corresponding to the sheet 31, an insulator 132B corresponding to the insulator 32, and an adhesive 133B corresponding to the adhesive 33. The model 111 is a model corresponding to a configuration in which the insulator 32 and the adhesive 33 illustrated in FIGS. 1 and 2 are cut by 0.0375 (= 0.0125 × 3) turns from the end on the proximal end surface side of the coil spring 2.

It is preferable that the members of the models 110 and 111 have the same setting conditions such as meshes.

In the analysis, the shear stress was calculated for each of the flush (see FIGS. 1 and 2), the model obtained as a result of cutting by 0.0375 turns, the model obtained as a result of cutting by 0.0750 turns, and the model obtained as a result of cutting by 0.1125 turns.

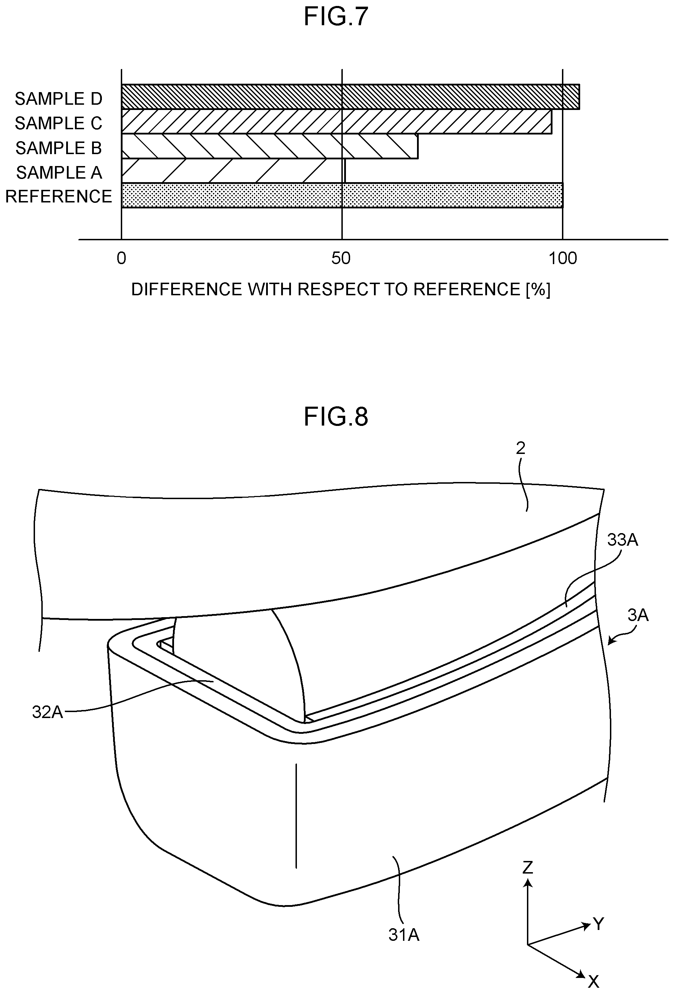

FIG. 7 is a view illustrating an analysis result, and is a view illustrating a result of an analysis of models in which an insulator and an adhesive are cut. FIG. 7 illustrates a ratio of the shear stress to the reference, using a sample A as the flush model (see FIG. 2), a sample B as the model obtained as a result of cutting by 0.0375 turns (see FIG. 6), a sample C as the model obtained as a result of cutting by 0.0750 turns (see FIG. 5), a sample D as the model obtained as a result of cutting by 0.1125 turns, and the reference as the model of the comparative reference spring member (see FIG. 3).

As illustrated in FIG. 7, in each of the samples A to C, the shear stress is reduced as compared with the reference. Further, the analysis result that the shear stress of the flush model is the lowest and the shear stress increases as the number of turns to be cut increases was obtained.

On the other hand, the result that the shear stress of the model (sample D) obtained as a result of cutting by 0.1125 turns is higher than the reference was obtained. This is considered as follows: an area in which the adhesive 33 receives a load from the coil spring 2 decreases when the mass (adhesion area) of the adhesive 33 or the like decreases, so that the shear stress increases.

From the result illustrated in FIG. 7, it can be said that the cutting amount of the insulator and the adhesive which enables a reduction in the shear stress with respect to the reference is a range from flush (0 turns) to 0.1000 turns.

In the embodiment described above, in the sheet portion 3 attached to the end of the coil spring 2, the positions of the ends of the insulator 32 and the adhesive 33 on the proximal end side of the coil spring 2 are located at the edge end of the coil spring 2 or closer to the other end side than the edge end, specifically, located at a position in a range from the flush (0 turns) to 0.1000 turns with respect to the proximal end surface of the coil spring 2. According to the present embodiment, by setting the end positions of the insulator 32 and the adhesive 33 to satisfy the conditions described above, when a load toward the sheet portion 3 is applied to the coil spring 2, it is possible to prevent damage due to the edge end of the coil spring 2 wedging into the adhesive 33 or the insulator 32, and as a result, a spring member capable of improving durability to withstand loads can be achieved.

In addition, according to the embodiment, by reducing the use amount of the insulator 32 and the adhesive 33 as compared with the conventional case, the weight of the spring member 1 can be reduced as compared with the conventional case.

In addition, according to the embodiment, by adopting the configuration described above, the natural frequency can be increased as compared with the conventional case, and as a result, damage and the like of the spring member 1 can be further prevented.

### (First Modification)

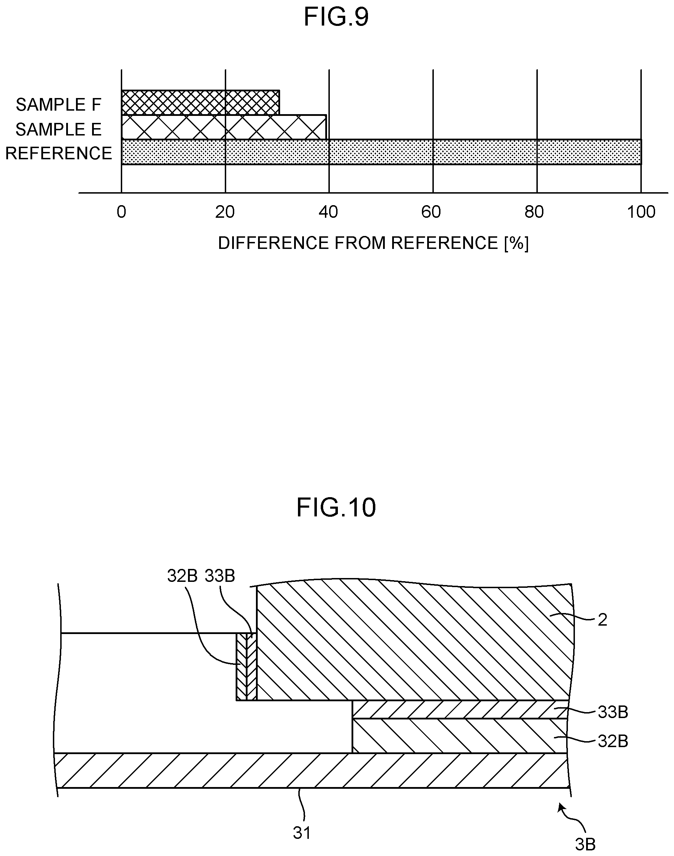

Next, the first modification to the embodiment of the present invention will be described with reference to FIGS. 8 and 9. FIG. 8 is an enlarged view of a part of a spring member according to the first modification. In the first modification, a configuration in which only the adhesive is cut in the above-described spring member will be described. Note that the same constituent elements as those in the embodiment described above are denoted by the same reference numerals.

The spring member according to the first modification includes a coil spring 2 formed by winding a wire rod in a helical way and a sheet portion 3A provided at an end (end on the proximal end side) of the coil spring 2 to receive a load of the coil spring.

The sheet portion 3A includes a sheet 31A that covers a part of the proximal end of the coil spring 2, an insulator 32A provided between the sheet 31A and the coil spring 2, and an adhesive 33A that adheres the insulator 32A and the coil spring 2 to each other.

The sheet 31A has a concave shape covering a part of the coil spring 2. The sheet 31A has a length less than one turn of the coil spring 2 and covers the proximal end of the coil spring 2. Specifically, the sheet 31A covers a part of a side surface of the coil spring 2 and a part of an end surface of the coil spring 2.

The insulator 32A is formed using an elastic material, for example, rubber. The insulator 32A is disposed between the sheet 31A and the coil spring 2 in a region where the sheet 31A is disposed.

Examples of the adhesive 33A include a resin. The adhesive 33A covers a part of the side surface of the coil spring 2, and an end of the adhesive 33A is flush with the end surface of the coil spring 2.

In the sheet portion 3A according to the first modification, the position of the end of the adhesive 33A on the coil spring 2 side is located closer to the proximal end than an edge end of the coil spring 2 including the edge end.

FIG. 9 is a view illustrating an analysis result, and is a view illustrating a result of an analysis of models in which an adhesive is cut. FIG. 9 illustrates a ratio of the shear stress to the reference, using a sample E as the flush model (see FIG. 8), and a sample F as the model obtained as a result of cutting by 0.0125 turns. At this time, each cutting amount including the flush is preferably set to have an effective range of ±0.05 with respect to the number of cut turns, including manufacturing errors.

As illustrated in FIG. 9, in each of the samples E and F, the shear stress is reduced as compared with the reference. Further, in the case of cutting only the adhesive, a result that the model obtained as a result of cutting by 0.0125 turns has a lower shear stress than the flush model was obtained.

From the result illustrated in FIG. 9, it can be said that the cutting amount of only the adhesive which enables a reduction in the shear stress with respect to the reference is effective at least in a range from flush (0 turns) to 0.0125 turns.

In the first modification described above, in the sheet portion 3A attached to the proximal end of the coil spring 2, the position of the end of the adhesive 33A on the proximal end side of the coil spring 2 is located at a position in a range from the flush (0 turns) to 0.0125 turns with respect to the proximal end surface of the coil spring 2. According to the first modification, similarly to the embodiment described above, it is possible to prevent damage due to the edge end of the coil spring 2 wedging into the adhesive 33A, and as a result, a spring member capable of improving durability to withstand loads can be achieved.

### (Second Modification)

Next, the second modification to the embodiment of the present invention will be described with reference to FIG. 10. FIG. 10 is a cross-sectional view illustrating a configuration of a part of a spring member according to the second modification to the embodiment of the present invention. In the second modification, a configuration in which only the side surface side of the coil spring 2 is cut in the above-described spring member will be described. Note that the same constituent elements as those in the embodiment described above are denoted by the same reference numerals.

The spring member according to the second modification includes a coil spring 2 formed by winding a wire rod in a helical way and a sheet portion 3B provided at a proximal end of the coil spring 2 to receive a load of the coil spring.

The sheet portion 3B includes a sheet 31 that covers a part of the proximal end of the coil spring 2, an insulator 32B provided between the sheet 31 and the coil spring 2, and an adhesive 33B that adheres the insulator 32B and the coil spring 2 to each other.

The insulator 32B is formed using an elastic material, for example, rubber. The insulator 32B is disposed between the sheet 31 and the coil spring 2 in a region where the sheet 31 is disposed.

Examples of the adhesive 33B include a resin.

In the sheet portion 3B according to the second modification, the positions of the ends of the insulator 32B and the adhesive 33B on the proximal end side of the coil spring 2 are located closer to a distal end than the edge end of the coil spring 2. Further, in the second modification, the insulator 32B and the adhesive 33B cover a part of the proximal end surface of the coil spring 2. The insulator 32B and the adhesive 33B in the second modification cover a part of the proximal end surface of the coil spring 2 and a part of the side surface on the proximal end side of the coil spring 2, and expose a part of that side surface. At this time, for example, on the side surface of the coil spring 2, the positions of the ends of the insulator 32B and the adhesive 33B on the coil spring 2 side are located closer to the distal end side than the flush (0 turns) and at a position in a range up to 0.1000 turns with respect to the end surface of the coil spring 2.

As described above, in the second modification, the insulator/adhesive provided on the proximal end of the coil spring 2 is disposed, and a part of the insulator/adhesive provided on the side surface continuous with the end surface of the coil spring 2 is cut.

According to the second modification, in the sheet portion 3B attached to the proximal end of the coil spring 2, the insulator 32B and the adhesive 33B cover a part of the proximal end surface and the side surface of the coil spring 2 and expose the side surface continuous with the end surface thereof. According to the second modification, similarly to the embodiment described above, it is possible to prevent damage due to the edge end of the coil spring 2 wedging into the adhesive 33B, and as a result, a spring member capable of improving durability to withstand loads can be achieved.

As described above, the present invention can include various embodiments and the like not described herein, and various design changes and the like can be made without departing from the technical idea specified by the claims. In the embodiment and the second modification described above, the positions of the ends of the insulator and the adhesive do not need to be flush with each other, and the end positions thereof may be shifted from each other.

### Industrial Applicability

As described above, the spring member according to the present invention is suitable for improving durability to withstand loads.

### Reference Signs List

1 SPRING MEMBER
2 COIL SPRING
3, 3A, 3B SHEET PORTION
31, 31A SHEET
32, 32A, 32B INSULATOR
33, 33A, 33B ADHESIVE

## Claims

1. A spring member comprising:
a coil spring formed of a wire rod wound in a helical way; and
a sheet portion provided at one end of the coil spring and configured to receive a load of the coil spring,
wherein
the sheet portion includes
a sheet configured to cover a part of the one end of the coil spring,
an insulator provided between the sheet and the coil spring, and
an adhesive configured to adhere the insulator and the coil spring, and
in the sheet portion, a position of an end of the adhesive on a side of the one end of the coil spring is located at an edge end of the coil spring or closer to a side of an other end of the coil spring than the edge end of the coil spring.

2. The spring member according to claim 1, wherein
in the sheet portion, a position of an end of each of the insulator and the adhesive on the side of the one end of the coil spring is located at the edge end of the coil spring or closer to the side of the other end of the coil spring than the edge end of the coil spring.

3. The spring member according to claim 2, wherein
the position of the end of each of the insulator and the adhesive on the side of the one end of the coil spring is located at a position in a range from the edge end to 0.1000 turns with respect to an end surface of the coil spring.

4. The spring member according to claim 1, wherein
the position of the end of the adhesive on the side of the one end of the coil spring is located at a position in a range from the edge end to 0.0125 turns with respect to an end surface of the coil spring.
